# EUROPEAN PATENT APPLICATION

(11) **EP 0 565 252 A1**
(43) Date of publication of application: **13.10.1993**
(21) Application number: 93302088.5
(22) Date of filing: 18.03.1993
(51) Int. Cl.: C25B 3/00

(54) **Hydrolysis**

(30) Priority: 07.04.1992 GB 9207546
(71) Applicant: UNITED KINGDOM ATOMIC ENERGY AUTHORITY, Oxfordshire OX11 0RA (GB); BAXENDEN CHEMICALS LTD, Baxenden, Nr Accrington, Lancashire BB5 2SL (GB)
(72) Inventor: Allen, Pauline Mary, Kingsdown, Bristol BS2 8NA (GB); Binns, Falmai, Bury, Lancashire BL8 4NW (GB)
(74) Representative: Mansfield, Peter Turquand

(57) **Abstract**

. An organic material which is immiscible with water, or which is in solution in a solvent which is immiscible with water, is hydrolysed by contacting it with an aqueous electrolyte and a phase transfer catalyst, and by generating hydroxyl ions in the electrolyte electrochemically. The process can operate at room temperature, using innocuous reagents : for example the electrolyte may be 0.1 M sodium chloride. One organic material which may be treated is epichlorohydrin.

## Description

This invention relates to a process for hydrolysing an organic material, in particular an organic material which is immiscible or insoluble in water.

It is known that certain organic materials can be hydrolysed by treatment with hot sodium hydroxide solution. This process has the disadvantages of requiring a source of heat, and of using a caustic reagent.

According to the present invention there is provided a process for hydrolysing an organic material which is insoluble in water, comprising contacting the material, or a solution of the material in an organic solvent immiscible with water, with an aqueous electrolyte and with a phase transfer catalyst, and generating hydroxyl ions in the electrolyte electrochemically.

The process may be performed in an electrochemical cell having an anode compartment and a cathode compartment linked by electrolyte, the hydrolysis occurring in the cathode compartment. The electrolyte may be, for example, 0.1 molar sodium chloride solution. The process can be performed at room temperature, and uses innocuous reagents.

The phase transfer catalyst might be, for example, the chloride or hydroxide of tetramethylammonium (TMA), tetrabutylammonium (TBA), or triethylbenzylammonium (TEBA).

The organic material might for example be epichlorohydrin, an organic liquid immiscible in water. Alternatively the material to be hydrolysed might be in solution in an organic solvent, for example tributyl phosphate in solution in odourless kerosene.

The invention will now be further described, by way of example only.

### Example

The hydrolysis process was performed in a glass H-cell, having two electrode compartments connected by a duct in which was a porous glass frit to prevent bulk flow of liquid between the compartments. In the anode compartment was a platinum foil electrode, while in the upper part of the cathode compartment was a platinum gauze electrode.

A solution of 1.5 g of tetramethylammonium chloride in 11.5 ml water was shaken in a separating funnel with 115 ml of epichlorohydrin, the volume made up to 155 ml with fresh epichlorohydrin, and it was shaken again. On settling there was found to be an 11.0 ml aqueous layer on a 143.5 ml epichlorohydrin layer; epichlorohydrin is denser than water.

5 ml from the epichlorohydrin layer was then poured into the cathode compartment of the H-cell. The anode compartment, the connecting duct, and the part of the cathode compartment not containing epichlorohydrin were then filled with 0.1 M aqueous sodium chloride solution so the levels were the same in both the anode and cathode compartments, and so both the electrodes were immersed in the sodium chloride solution.

The contents of the H-cell were then degassed with nitrogen for 15 minutes to remove any dissolved oxygen. A potential difference was then applied between the electrodes, and the contents of the cathode compartment stirred continuously with a magnetic stirrer bar. The applied potential difference was gradually increased and the corresponding electric current monitored. Negligible current flowed until the cathode voltage reached about -0.9 V versus a saturated calomel electrode (SCE). Thereafter, further increase in the applied potential difference led to an increase in current, until the power supply was overloaded, at a cathode voltage of about -2.0 V against SCE. Then, for most of the electrolysis, the cathode was maintained at a voltage of - 1.95 V against SCE. During electrolysis the total electric charge passed was monitored, and when this reached 2 kC the power supply was switched off.

At this stage the epichlorohydrin layer had almost totally disappeared. The catholyte was found to be almost neutral, while the anolyte was strongly acidic, and contained a bleaching agent.

It will be appreciated that 5 ml of epichlorohydrin is 0.064 moles, while passage of an electric charge of 2 kC corresponds to the production of just over 0.02 moles of hydroxyl ions. The epichlorohydrin can be attacked by two mechanisms: chloride ion attack, leading to 1,3-dichloropropanol; and hydroxyl ion attack, leading to 3-chloro-propan-1,2-diol. The latter is a base-catalysed reaction, and does not require a stoichiometric amount of hydroxyl ions to be provided. In the circumstances of this Example both attack mechanisms occur, so both alcohols are formed.

Chloride Attack

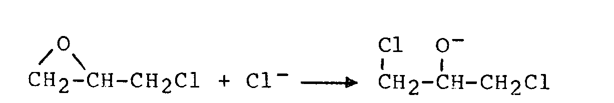

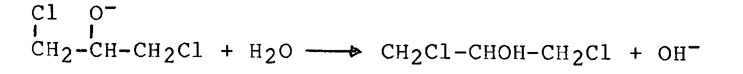

Hydroxyl Attack

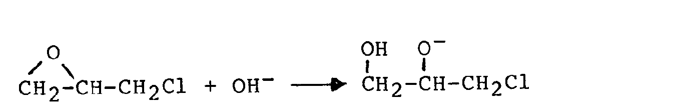

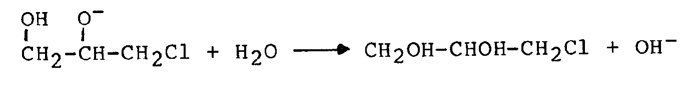

Hydroxyl ions are generated by electrolysis at the cathode. Tetramethylammonium hydroxide is therefore formed, in the aqueous layer, and in this form dissolves in the organic layer, where the hydroxyl ion can react with the epichlorohydrin as indicated above. Hence the catholyte is still substantially neutral at the end of the process (as observed).

Tetramethylammonium chloride also dissolves in the organic layer, and chloride ion attack on epichlorohydrin leads to 1,3-dichloropropanol as described above. Unlike hydroxide ion attack, this reaction requires a stoichiometric amount of chloride ions. A competing process is migration of chloride ions to the anode compartment (so tending to leave the catholyte). At the anode, oxygen evolution and chlorine evolution both occur. Hence the anolyte becomes strongly acidic, and contains a bleaching agent (as observed).

For comparison the above process was repeated, but using pure epichlorohydrin, so that no phase transfer catalyst was present. As above, the electrolysis was terminated when 2 kC of charge had passed. The catholyte was again found to be almost neutral, and the anolyte strongly acidic and containing a bleaching agent. However there was still a well-defined organic layer in the cathode compartment. Hence in the absence of a phase transfer catalyst epichlorohydrin is much less extensively hydrolysed.

It will be appreciated that the process may be performed using a different electrolyte to that described above, for example a different concentration of sodium chloride, or a different solute such as sodium hydroxide. Furthermore it may be performed continuously, in a flow cell, rather than batch-wise. It will be appreciated that if the organic liquid to be treated (whether the material to be hydrolysed, or a solvent for the material) is lighter than the aqueous electrolyte, the electrode in the cathode compartment will be in the lower part of the compartment.

## Claims

1. A process for hydrolysing an organic material which is insoluble in water, comprising contacting the material, or a solution of the material in an organic solvent immiscible with water, with an aqueous electrolyte and with a phase transfer catalyst, and generating hydroxyl ions in the electrolyte electrochemically.

2. A process as claimed in Claim 1 wherein the aqueous electrolyte comprises sodium chloride solution.

3. A process as claimed in Claim 1 wherein the aqueous electrolyte comprises sodium hydroxide solution.

4. A process as claimed in anyone of the preceding Claims wherein the phase transfer catalyst is the chloride or hydroxide of tetramethylammonium, tetrabutylammonium, or triethylbenzyl ammonium.

5. A process as claimed in any one of the preceding Claims wherein the hydroxyl ions are generated in an electrochemical cell having an anode compartment and a cathode compartment linked by means to suppress bulk flow of electrolyte between the two compartments.

6. A process as claimed in any one of the preceding Claims wherein the organic material comprises epichlorohydrin.

7. A process as claimed in any one of Claims 1 to 5 wherein the organic material comprises a solution of tributyl phosphate in an organic solvent.
